# EUROPÄISCHE PATENTSCHRIFT

(11) **EP 1 879 288 B1**
(45) Veröffentlichungstag und Bekanntmachung des Hinweises auf die Patenterteilung: **11.07.2018**
(21) Anmeldenummer: 07108459.4
(22) Anmeldetag: 18.05.2007
(51) Int. Cl.: H02P 6/18, H02P 7/282, H02P 7/29, H02P 23/12, H02P 23/14, H02P 6/00, E05F 1/00

(54) **Drehwinkelbestimmung eines Elektromotors**
Rotation angle determination for an electric motor
Détermination de l'angle de rotation d'un moteur électrique

(30) Priorität: 12.07.2006 DE 102006032193
(43) Veröffentlichungstag der Anmeldung: 16.01.2008
(73) Patentinhaber: ROBERT BOSCH GMBH, 70442 Stuttgart (DE)
(72) Erfinder: Brosche, Thomas, 70195, Stuttgart (DE); Heimburger, Stefan, 77731, Willstaett-Legelshurst (DE); Krueger, Hartmut, 77830, Buehlertal (DE); Selinger, Joachim, 70597, Stuttgart (DE); Bitzer, Matthias, 70569, Stuttgart (DE)

(56) Entgegenhaltungen:
- EP-A1- 1 659 683
- DE-C1- 19 729 238

## Beschreibung

### Stand der Technik

Die vorliegende Erfindung betrifft ein Verfahren und eine Vorrichtung zur Bestimmung eines Schätzfehlers eines geschätzten Motordrehwinkels eines Elektromotors durch Signalauswertung der mechanischen Kommutierungsvorgänge im Motorstromsignal und/oder Motorspannungssignal, bei dem Motorparameter nach einem Einschalten des Motors erst nach einer bestimmten Zeitdauer zur Verfügung stehen und ein vorläufiger Motordrehwinkel während dieses Zeitraums mit Hilfe von aus vorangegangenen Motorläufen geschätzten oder ggf. mit vorgegebenen nominellen Motorparametern bestimmt wird.

### Offenbarung der Erfindung

Zur Positionsbestimmung von mechanisch kommutierten Gleichstrommotoren werden in der Regel Hallsensoren eingesetzt. Andere Verfahren basieren auf einer Zählung der durch den mechanischen Kommutierungsvorgang im Motorstromsignal entstehenden Ripple. Solche Ripple-Counter-Verfahren sind z.B. in der DE 100 28 033, den DE 100 28 035 bis DE 100 28 041 und in der US 20030111996 beschrieben. Hierbei werden die kommutierungsbedingten Ripple durch Filterung (Hochpass, Tiefpass, Bandpass) vor der eigentlichen Zählung bestmöglich vom Stromsignal getrennt.

In der DE 197 29 238 C1 wird ein Verfahren vorgeschlagen, das mit Hilfe eines Motorzustandsmodells, eines Ripple-Detektors und einer nachgeschalteten Auswerteeinheit die Motordrehzahl und daraus die Motor- bzw. Aktuatorposition ermittelt. Die Drehzahl wird hierbei aus dem zeitlichen Abstand der erkannten Kommutierungsvorgänge bestimmt und mit der anhand des Motorzustandsmodells geschätzten Drehzahl verglichen. Die Auswerteeinheit ermittelt dann den jeweils wahrscheinlicheren Drehzahlwert und aus dem Drehzahlwert durch Integration über die Messzeit den Drehwinkel.

Aus der DE 199 25 327 A1 ist ein Verfahren zum elektronischen Überwachen und Steuern eines Prozesses zum Verstellen beweglicher Teile, insbesondere von Fenstern und Schiebedächern eines Kraftfahrzeugs, zur Gewährleistung eines Einklemmschutzes bekannt. Dieses weist mindestens die folgenden Schritte auf: Zuführen von für den Prozess charakteristischen Eingangs- und Ausgangsgrößen zu einer Erkennungseinrichtung, Auffinden und Optimieren von typischen Prozessgrößen eines in der Erkennungseinrichtung abgelegten und den Prozess beschreibenden Modells, Bewerten der typischen Parameter durch Vergleich mit in der Erkennungseinrichtung abgelegten Prozessgrößen, Ermitteln einer Korrekturgröße für den Prozess in Abhängigkeit des Vergleichs, und Beeinflussen des Prozesses durch Zuführen der ermittelten Korrekturgröße zu dem Prozess.

Die EP1 659 683 A1 beschreibt die Ermittlung eines Motorwinkels, bei dem die Differenz zwischen dem gemessenen Motorstrom und dem über ein Beobachtermodell ermittelten Strom gebildet wird. Diese Differenz zeigt den Ripple-Strom des Kommutators und dient zur Bestimmung des Motorwinkels. Die Parameter des Beobachtermodells werden über eine Rückführung laufend angepasst.

Desweiteren sind aus der Regelungstechnik und Systemtheorie modellgestützte Zustands- und Parameterschätzverfahren bekannt, mit denen sowohl die Zustände als auch die Parameter des dynamischen Modells einer Regelstrecke (z.B. DC-Motor) geschätzt werden können. Diese Verfahren werden als Beobachter (Zustands- bzw. Luenberger-Beobachter), Filter (Kalman-Filter), oder rekursive Parameterschätzmethoden bezeichnet.

Es ist daher die der vorliegenden Erfindung zugrunde liegenden Aufgabe, bei der Bestimmung der Drehwinkelposition eines Elektromotors, der eine periodische Modulation eines Motorstromsignals und/oder eines Motorspannungssignals in Abhängigkeit von dem Motordrehwinkel zeigt, anhand von Messwerten für das Motorstromsignal, d.h. einem Ankerstrom, und/oder das Motorspannungssignal, d.h. einer Klemmenspannung die Robustheit zu erhöhen.

### Vorteile der Erfindung

Das erfindungsgemäße Verfahren zur Bestimmung eines geschätzten Motordrehwinkels eines Elektromotors durch Signalauswertung vom Motorstromsignal und/oder Motorspannungssignal, bei dem (aktuelle) neu geschätzte Motorparameter (zur Verwendung in modellbasierten Zustandschätzverfahren, wie z.B. Beobachter, zur Drehwinkelbestimmung) nach einem Einschalten des Motors erst nach einer bestimmten Zeitdauer zur Verfügung stehen und ein vorläufiger Motordrehwinkel während dieses Zeitraums mit Hilfe von aus vorangegangenen Motorläufen geschätzten bzw. nominellen Motorparametern bestimmt wird, ist gekennzeichnet durch eine Fehlerrechnung, bei der ein Fehlerwinkel zwischen dem mit Hilfe von aus vorangegangenen Motorläufen geschätzten bzw. nominellen Motorparametern bestimmten vorläufigen Motordrehwinkel und einem nach der bestimmten Zeitdauer anhand der dann zur Verfügung stehenden Motorparameter bestimmten geschätzten Motordrehwinkel berechnet und ggf. für die Korrektur des vorläufigen Motordrehwinkels verwendet wird. Diese Rechnung kann in Abhängigkeit der zur Verfügung stehenden Rechenkapazität online ausgeführt oder als Nachlaufrechnung offline durchgeführt werden.

Die erfindungsgemäße Vorrichtung zur Bestimmung eines geschätzten Motordrehwinkels eines Elektromotors durch Signalauswertung der mechanischen Kommutierungsvorgänge im Motorstromsignal und/oder Motorspannungssignal, bei dem (neu geschätzte) Motorparameter nach einem Einschalten des Motors erst nach einer bestimmten Zeitdauer zur Verfügung stehen und ein vorläufiger Motordrehwinkel während dieses Zeitraums mit Hilfe von aus vorangegangenen Motorläufen geschätzten oder ggf. mit nominellen Motorparametern bestimmt wird, ist gekennzeichnet durch eine Fehlerrechnungseinheit, die einen Fehlerwinkel zwischen dem mit Hilfe von aus vorangegangenen Motorläufen geschätzten bzw. nominellen Motorparametern bestimmten vorläufigen Motordrehwinkel und einem nach der bestimmten Zeitdauer anhand der dann zur Verfügung stehenden Motorparameter bestimmten geschätzten Motordrehwinkel berechnet, der dann ggf. innerhalb der Fehlerberechnungseinheit für die Bestimmung bzw. Korrektur des vorläufigen Motordrehwinkels verwendet wird.

Bei sensorreduzierten Verfahren zur Positionseinschätzung werden gleichzeitig eine Reihe von Schätzaufgaben wie z.B. Frequenz-, Parameter- und Zustandsschätzung (Beobachter) online gerechnet. Die Durchführung von Frequenz- und Parameterschätzaufgaben erfordern die Auswertung von Messdaten über einen definierten Zeitraum. Diese notwendigen Auswertedauern einzelner Teilsysteme bedingen Verzögerungen bis zum Erhalt der aktuellsten Schätzergebnisse aller Teilkomponenten des Algorithmus. Insbesondere sind das die Motorparameter wie z.B. Motorkonstante, Ankerwiderstand, Induktivität und mechanische Parameter. Die Erfindung führt nach Vorliegen der Schätzergebnisse aller Teilfunktionen des SLC-Algorithmus eine Fehler-/Nachlaufrechnung für den bis zu diesem Zeitpunkt ermittelten Drehwinkel des DC-Motors durch. D.h., der bis zum Erhalt der vollständigen Schätzinformation errechnete Positionswinkel wird auf der Basis der aktuellsten und vollständigen Schätzinformation überprüft und Ungenauigkeiten aufgrund der oben diskutierten Auswertedauern und Verzögerungen werden korrigiert.

Im Ergebnis erreicht man durch die genannte Korrektur eine wesentliche Erhöhung der Robustheit des gesamten SLC-Verfahrens, besonders bei starken Parameter- bzw. Temperaturschwankungen zwischen Aus- und erneutem Einschalten des Motors.

Weiter sind erfindungsgemäß für die Drehwinkelbestimmung keine zusätzlichen Sensoren (z.B. Hallsensoren) einschließlich zu deren Anschluss benötigter Kabel, Stecker und Hardware für die Signalauswertung notwendig. Dadurch wird erfindungsgemäß eine Reduktion der Systemkosten ermöglicht.

Die Unteransprüche zeigen bevorzugte Weiterbildungen der Erfindung.

Der geschätzte Motordrehwinkel wird nach der Erfindung vorzugsweise mittels eines Motormodells aus dem Motorstromsignal und/oder dem Motorspannungssignal ermittelt. Das Motormodell ist weiter vorzugsweise in einen Beobachter integriert und wird über dessen Beobachterfunktion optimiert.

Erfindungsgemäß erfolgt die Fehlerrechnung während des Betriebs des Motors nach der Bestimmung des geschätzten Motordrehwinkels, d.h. online.

In einer alternativen zweiten bevorzugten Weiterbildung erfolgt die Fehlerrechnung nach einem Abschalten des Motors, d.h. offline.

Das erfindungsgemäße Verfahren und die erfindungsgemäße Vorrichtung sind vorzugsweise in Sitzsteuergeräten für Autositze oder in Steuergeräten für Schiebedächer, Fensterheber oder Klappensteller integriert.

### Kurze Beschreibung der Zeichnungen

Weitere Vorteile der Erfindung ergeben sich aus der folgenden Zeichnungsbeschreibung. In den Zeichnungen sind Ausführungsbeispiele der Erfindung beispielhaft dargestellt. Die Zeichnungen, die Beschreibung und die Ansprüche enthalten zahlreiche Merkmale in Kombination oder als bevorzugtes Ausführungsbeispiel der Erfindung bezeichnet. Der Fachmann wird die Merkmale zweckmäßigerweise auch einzeln betrachten und/oder zur sinnvollen weiteren Kombination zusammenfassen.

In der Zeichnung zeigt:
- Figur 1: einen grundsätzlichen Aufbau einer bevorzugten Ausführungsform der Vorrichtung des Verfahrens nach der Erfindung, und
- Figur 2: einen prinzipiellen Aufbau der erfindungsgemäßen Fehlerrechnungseinheit.

### Ausführungsformen der Erfindung

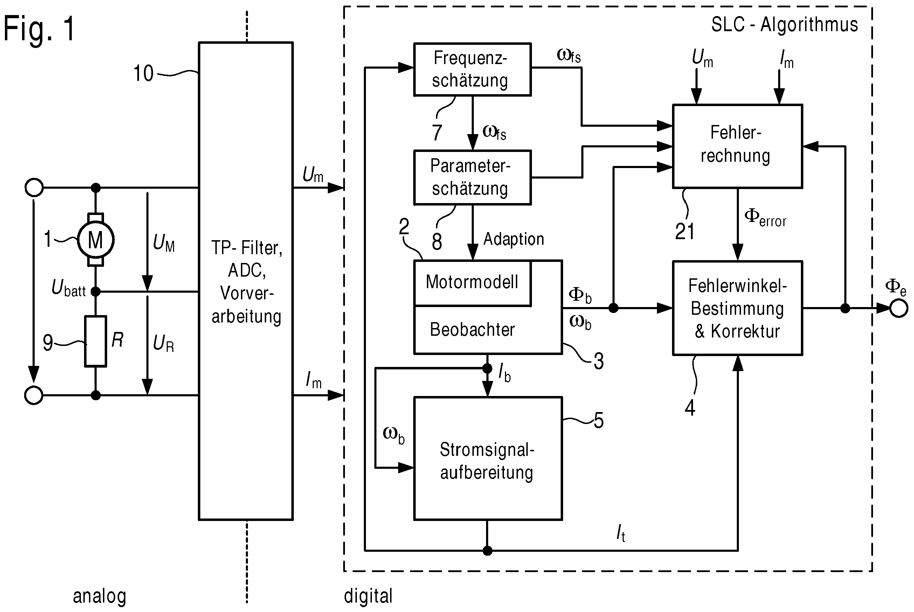

In Figur 1 ist der grundsätzliche Aufbau einer bevorzugten Ausführungsform des erfindungsgemäßen Systems dargestellt. Das System basiert auf der Messung der über den Motor abfallenden Spannung (Klemmenspannung) sowie des im Motor fließenden Stroms (Ankerstrom). Dazu werden am Motor 1 die Klemmenspannung U_{M} und die über einen zum Motor 1 in Reihe geschalteten Shunt-Widerstand 9 abfallende Spannung U_{R} gemessen. Die Versorgungsspannung für den Motor U_{batt} liegt über der Reihenschaltung aus Motor 1 und Shunt-Widerstand 9 an. Die analoge Klemmenspannung U_{M} und die über den Shunt-Widerstand 9 abfallende Spannung U_{R} werden in einer Erfassungseinheit 10 verstärkt, tiefpassgefiltert (Anti-Aliasing-Filter), digitalisiert (A/D-Wandlung) und in einer Vorverarbeitung in die digitalisierten Signale Klemmenspannung Uₘ sowie Ankerstrom Iₘ umgesetzt.

Nachfolgend werden dann die digitalisierten Signale Klemmenspannung Uₘ und Ankerstrom Iₘ mit Hilfe des erfindungsgemäßen Systems ausgewertet und hierdurch der gesuchte Motordrehwinkel Φₑ bestimmt. Das erfindungsgemäße System kann z.B. durch ein µC oder eine geeignete spezifische Hardware (FPGA, ASIC, etc.), wie auch einen diskreten Aufbau realisiert werden. In Figur 1 ist beispielshaft die Beschaltung des Motors bei Nutzung nur eines Shunt-Widerstands 9 ohne den für die Ansteuerung des Motors 1 notwendigen Schalter (Relais, Transistor, etc.) dargestellt. Eine Beschaltung mit Hilfe von zwei, jeweils an der unteren und der oberen Motorklemme angebrachten mit dem Motor 1 in Reihe geschalteten Shunt-Widerständen (nicht dargestellt), ist ebenfalls möglich, jedoch nicht wesentlich für das erfindungsgemäße System.

Die in der Figur 1 gezeigte bevorzugte Ausführungsform des erfindungsgemäßen Systems zur Bestimmung des gesuchten Motordrehwinkels Φₑ besteht im Wesentlichen aus einem Beobachter 3 und einer Fehlerwinkelbestimmung und Korrektur 4. Der Beobachter 3 beinhaltet ein Motormodell 2, dessen Parameter, z.B. Induktivität, Widerstand, Motorkonstante, Reibung und Getriebeelastizitäten, anhand der digitalisierten Motorspannung Uₘ und des digitalisierten Motorstroms Iₘ durch eine Parameterschätzung 8 ermittelt werden. Gegebenenfalls wird von einer Frequenzschätzung 7 eine geschätzte Kreisfrequenz ω_{fs} ermittelt, auf der die Parameterschätzung 8 basiert. Mit Hilfe des Beobachters 3 werden nun die Zustände des Motors 1, z.B. Strom I_{b}, Drehfrequenz ω_{b} und der Drehwinkel Φ_{b} und ggf. auch das Lastmoment M_{L} und weitere applikationsspezifische Zustände geschätzt. Bei ausreichend hoher Genauigkeit des Motormodells 2 bzw. der geschätzten Parameter sowie der Kenntnis aller Eingangsgrößen kann der Beobachter 3 auch als reiner Simulator, d.h., nur mit dem Motormodell 2 ohne aufgeschaltete Korrekturfunktion des Beobachters 3, betrieben werden. Da eine solche Schätzung der Zustände des Motors und weiterer applikationsspezifischer Zustände allgemein in der Fachliteratur, z.B. O. Föllinger: Regelungstechnik: Einführung in die Methoden und ihrer Anwendung, 8. Auflage, Hüthig GmbH, Heidelberg, 1994, und H. Unbehauen, Regelungstechnik, Band 1: Klassische Verfahren zur Analyse und Synthese linearer kontinuierlicher Regelsysteme, Fuzzy-Regelsysteme, 12. Auflage, Vieweg, 2002, wie auch in der DE 197 29 238 C1 zu finden sind, werden diese hier nicht näher beschrieben. Als Rückführgrößen für den Beobachter können hierbei eine oder mehrere der Zustandsgrößen digitalisierter (gemessener) Motorstrom Iₘ, geschätzte Frequenz ωₑ und geschätzter Winkel Φ_{fs} verwendet werden.

In einer Stromsignalaufbereitungseinheit 5 wird über geeignete Filterverfahren das Stromripplesignal I_{f} extrahiert.

Mit Hilfe des gefilterten Stromripplesignals I_{f} wird nun sowohl eine Frequenzschätzung mittels einer Frequenzschätzungseinheit 7 vorgenommen, die wiederum als Eingabesignal für die mittels der Parameter-Schätzeinheit 8 durchgeführten Parameterschätzung dient, als auch eine Fehlerwinkelbestimmung in der Vergleichereinheit 4 durchgeführt. Mit Hilfe der Fehlerwinkelbestimmung soll der Fehler ΔΦ_{b} = Φ_{b} - Φ des durch den Beobachter geschätzten Motordrehwinkels Φ_{b}, d.h., die Abweichung zwischen dem durch das Motormodell 2 geschätzten Motordrehwinkel Φ_{b}, und dem tatsächlichen Motordrehwinkel Φ ermittelt und nachfolgend korrigiert werden.

Dazu wird die Phasenlage der durch die mechanischen Kommutierungsvorgänge hervorgerufenen Stromripple ausgewertet. Die Vergleichereinheit gibt dann den korrigierten geschätzten Winkel Φₑ aus.

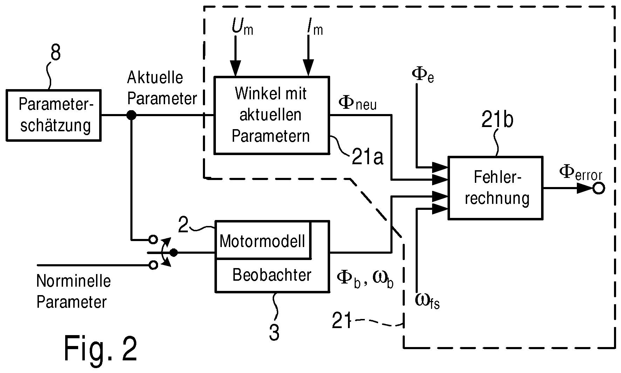

Der für das SLC-Verfahren verwendete Beobachter besteht aus zwei Teilen: einem Simulatorteil und einem Korrekturterm. Dem Simulatorteil liegt ein Modell des Gleichstrommotors zugrunde. Die Parameter des Motormodells werden mit Hilfe von Parameterschätzverfahren auf der Basis von Strom- und Spannungsmessungen sowie durch Signalauswertung der Stromripplefrequenz errechnet, wie zuvor beschrieben. Da Identifikations- bzw. Parameterschätzverfahren typischerweise die Messdaten während eines Zeitintervalls benötigen, stehen die Motorparameter nach dem Einschalten des Motors erst nach einer entsprechenden Zeitdauer zur Verfügung. Während dieses Zeitraums wird der Beobachter mit Hilfe von aus vorangegangenen Motorläufen geschätzten Parametern, die in Figur 2 als "nominelle" Parameter bezeichnet werden, betrieben. Aufgrund von z.B. Temperaturänderungen können sich die Motor-Parameter zwischen zwei aufeinanderfolgenden Motorläufen gegebenenfalls ändern. Erfindungsgemäß wird nach dem Einschalten und nach erstmaligem Erhalt der neuesten Parameter-Schätzwerte des aktuellen Motorlaufs der Positionswinkel Φₙₑᵤ, vgl. Figur 2, für den Zeitraum vom Einschalten bis zum Vorliegen der aktuellsten Parameterwerte und auf der Grundlage der vollständig vorliegenden Information neu berechnet. Daran anschließend wird eine Fehlerrechnung durchgeführt und der Fehlerwinkel Φ_{error, beo} = Φₙₑᵤ - Φ_{b} des Beobachters berechnet. Der Winkel Φ_{b} stellt den Beobachterwinkel, der in dem oben genannten Zeitraum mit Hilfe des Beobachters auf der Basis der nominellen Paramter geschätzt wurde, dar. Der berechnete Beobachterfehler Φ_{error, beo} wird dann mit dem Stromripple korrigierten Winkelsignal Φₑ synchronisiert und der Fehlerwinkel Φₑᵣᵣₒᵣ berechnet. Zur Minimierung des Schätzfehlers wird ggf. weiterhin die in der Kreisfrequenz ω_{fs} der Frequenzschätzung 7 enthaltene Winkelinformation verwendet.

Erfindungsgemäß umfasst das System eine Fehlerrechnungseinheit 21, die diese Berechnungen durchführt. Die Fehlerrechnungseinheit 21 erhält die geschätzte Kreisfrequenz ω_{fs} von der Frequenzschätzung 7, die Parameter des Motormodells von der Parameterschätzung 8, die Drehfrequenz ω_{b} und den Drehwinkel Φ_{b} vom Beobachter, den bestimmten Motordrehwinkel Φₑ von der Vergleichereinheit 4 und gibt den Fehlerwinkel Φₑᵣᵣₒᵣ an die Vergleichereinheit 4 aus.

Figur 2 zeigt die Fehlerrecheneinheit 21 und die dieser zugeführten Signale im Detail, nämlich eine Einheit 21a zur Bestimmung des Winkels mit den aktuellen Parametern, die den Positionswinkel Φₙₑᵤ bestimmt und eine eigentliche Fehlerrechnung 21b, die den Fehlerwinkel Φₑᵣᵣₒᵣ bestimmt.

Durch die Fehlerrechnung lassen sich Ungenauigkeiten während des Motoranlaufs kompensieren, die aufgrund der verzögerten Verfügbarkeit der aktuellen Motorparameter aus den oben genannten Gründen auftreten können. Der Ansatz erhöht die Robustheit der mit Hilfe des SLC-Verfahrens und des Beobachters durchgeführten Positionsschätzung.

Das erfindungsgemäß vorgeschlagene System einer sensorlosen Bestimmung des Motordrehwinkels ist nicht nur bei Gleichstrommotoren, sondern auch bei beliebigen anderen Motoren einsetzbar, die eine vergleichbare periodische Modulation des Strom- bzw. Spannungssignals in Abhängigkeit vom Motordrehwinkel zeigen.

## Patentansprüche

1. Verfahren zur Bestimmung eines geschätzten Motordrehwinkels (Φ_{b}) eines Elektromotors (1) durch Signalauswertung vom Motorstromsignal (Iₘ) und/oder Motorspannungssignal (Uₘ), bei dem Motorparameter nach einem Einschalten des Motors (1) erst nach einer bestimmten Zeitdauer zur Verfügung stehen und ein vorläufiger Motordrehwinkel während dieses Zeitraums mit Hilfe von aus vorangegangenen Motorläufen geschätzten Motorparametern bestimmt wird, **gekennzeichnet durch** eine Fehlerrechnung (21), bei der ein Fehlerwinkel (Φₑᵣᵣₒᵣ) zwischen dem mit Hilfe von aus vorangegangenen Motorläufen geschätzten Motorparametern bestimmten vorläufigen Motordrehwinkel (Φ_{b}) und einem nach der bestimmten Zeitdauer anhand der dann zur Verfügung stehenden Motorparameter bestimmten geschätzten Motordrehwinkel (Φₙₑᵤ) berechnet und für die Korrektur des vorläufigen Motordrehwinkels (Φ_{b}) verwendet wird.

2. Verfahren nach Anspruch 1, **dadurch gekennzeichnet, dass** der geschätzte Motordrehwinkel (Φ_{b}) mittels eines Motormodells (2) aus dem Motorstromsignal (Iₘ) und/oder dem Motorspannungssignal (Uₘ) ermittelt wird.

3. Verfahren nach Anspruch 2, **dadurch gekennzeichnet, dass** das Motormodell (2) über eine Beobachterfunktion (3) optimiert wird.

4. Verfahren nach einem der vorstehenden Ansprüche 1 bis 3, **dadurch gekennzeichnet, dass** die Fehlerrechnung (21) während des Betriebs des Motors (1) nach der Bestimmung des neu geschätzten Motordrehwinkels (Φₙₑᵤ) erfolgt.

5. Verfahren nach einem der vorstehenden Ansprüche 1 bis 3, **dadurch gekennzeichnet, dass** die Fehlerrechnung (21) nach einem Abschalten des Motors (1) erfolgt.

6. Verfahren nach einem der vorstehenden Ansprüche, **dadurch gekennzeichnet, dass** es in einem Sitzsteuergerät für Autositze und/oder in einem Steuergerät für Schiebedächer, Fensterheber oder Klappensteller eingesetzt wird.

7. Vorrichtung zur Bestimmung eines geschätzten Motordrehwinkels (Φ_{b}) eines Elektromotors (1) durch Signalauswertung vom Motorstromsignal (Iₘ) und/oder Motorspannungssignal (Uₘ), bei dem neu geschätzte Motorparameter nach einem Einschalten des Motors (1) erst nach einer bestimmten Zeitdauer zur Verfügung stehen und ein vorläufiger Motordrehwinkel (Φ_{b}) während dieses Zeitraums mit Hilfe von aus vorangegangenen Motorläufen geschätzten Motorparametern bestimmt wird, **gekennzeichnet durch** eine Fehlerrechnungseinheit (21), die einen Fehlerwinkel (Φₑᵣᵣₒᵣ) zwischen dem mit Hilfe von aus vorangegangenen Motorläufen geschätzten Motorparametern bestimmten vorläufigen Motordrehwinkel (Φ_{b}) und einem nach der bestimmten Zeitdauer anhand der dann zur Verfügung stehenden Motorparameter bestimmten geschätzten Motordrehwinkel (Φₙₑᵤ) berechnet, der dann für die Korrektur des vorläufigen Motordrehwinkels (Φ_{b}) des Motors (1) verwendet wird.

8. Vorrichtung nach Anspruch 7, **gekennzeichnet durch** ein Motormodell (2) zur Ermittlung des geschätzten Motordrehwinkels (Φ_{b}) aus dem Motorstromsignal (Iₘ) und/oder dem Motorspannungssignal (Uₘ).

9. Vorrichtung nach Anspruch 8, **gekennzeichnet durch** einen Beobachter (3), in den das Motormodell (2) zur Optimierung integriert ist.

10. Vorrichtung nach einem der vorstehenden Ansprüche 7 bis 9, **dadurch gekennzeichnet, dass** sie in ein Sitzsteuergerät für Autositze und/oder in ein Steuergerät für Schiebedächer, Fensterheber oder Klappensteller integriert ist.

## Claims

1. Method for determining an estimated motor rotation angle (φ_{b}) of an electric motor (1) by signal evaluation of the motor current signal (Iₘ) and/or motor voltage signal (Uₘ) , in which motor parameters are only available after a certain time period after switching on the motor (1) and a provisional motor rotation angle is determined during this time period with the aid of motor parameters estimated from previous motor runs, **characterized by** an error calculation (21), in which an error angle (φₑᵣᵣₒᵣ) between the provisional motor rotation angle (φ_{b}), determined with the aid of motor parameters estimated from previous motor runs, and an estimated motor rotation angle (φ_{new}), determined after the specific time period on the basis of the motor parameters then available, is calculated and is used for the correction of the provisional motor rotation angle (φ_{b}).

2. Method according to Claim 1, **characterized in that** the estimated motor rotation angle (φ_{b}) is ascertained by means of a motor model (2) from the motor current signal (Iₘ) and/or the motor voltage signal (Uₘ).

3. Method according to Claim 2, **characterized in that** the motor model (2) is optimized by using an observer function (3).

4. Method according to one of the preceding Claims 1 to 3, **characterized in that** the error calculation (21) is performed during the operation of the motor (1) after the determination of the newly estimated motor rotation angle (φ_{new}).

5. Method according to one of the preceding Claims 1 to 3, **characterized in that** the error calculation (21) is performed after switching off the motor (1).

6. Method according to one of the preceding claims, **characterized in that** it is used in a seat controller for car seats and/or in a controller for sliding roofs, window lifters or flap actuators.

7. Device for determining an estimated motor rotation angle (φ_{b}) of an electric motor (1) by signal evaluation of the motor current signal (Iₘ) and/or motor voltage signal (Uₘ), in which newly estimated motor parameters are only available after a certain time period after switching on the motor (1) and a provisional motor rotation angle (φ_{b}) is determined during this time period with the aid of motor parameters estimated from previous motor runs, **characterized by** an error calculation unit (21), which calculates an error angle (φₑᵣᵣₒᵣ) between the provisional motor rotation angle (φ_{b}), determined with the aid of motor parameters estimated from previous motor runs, and an estimated motor rotation angle (φ_{new}), determined after the specific time period on the basis of the motor parameters then available, which is then used for the correction of the provisional motor rotation angle (φ_{b}) of the motor (1).

8. Device according to Claim 7, **characterized by** a motor model (2) for ascertaining the estimated motor rotation angle (φ_{b}) from the motor current signal (Iₘ) and/or the motor voltage signal (Uₘ).

9. Device according to Claim 8, **characterized by** an observer (3), in which the motor model (2) is integrated for optimization.

10. Device according to one of the preceding Claims 7 to 9, **characterized in that** it is integrated in a seat controller for car seats and/or in a controller for sliding roofs, window lifters or flap actuators.

## Revendications

1. Procédé de détermination d'un angle de rotation estimé (ϕ_{b}) d'un moteur électrique (1) par évaluation du signal (Iₘ) de courant du moteur et/ou du signal (Uₘ) de tension du moteur, dans lequel des paramètres du moteur ne sont disponibles qu'après qu'une certaine durée s'est écoulée depuis le branchement du moteur (1) et un angle provisoire de rotation du moteur est défini pendant cette durée à l'aide de paramètres du moteur estimés à partir de courses antérieures du moteur, **caractérisé par**
un calcul d'erreur (21) dans lequel un angle d'erreur (ϕₑᵣᵣₒᵣ) entre l'angle provisoire (ϕ_{b}) de rotation du moteur défini à l'aide de paramètres du moteur estimés à partir de courses antérieures du moteur et un angle estimé (ϕₙₑᵤ) de rotation du moteur défini après la durée définie à l'aide des paramètres du moteur disponibles à ce moment est utilisé pour corriger l'angle provisoire de rotation (ϕ_{b}) du moteur.

2. Procédé selon la revendication 1, **caractérisé en ce que** l'angle estimé (ϕ_{b}) de rotation du moteur est déterminé au moyen d'un modèle (2) du moteur sur la base du signal (Iₘ) du courant du moteur et/ou du signal (Uₘ) de tension du moteur.

3. Procédé selon la revendication 2, **caractérisé en ce que** le modèle (2) du moteur est optimisé par l'intermédiaire d'une fonction d'observation (3).

4. Procédé selon l'une des revendications 1 à 3 qui précèdent, **caractérisé en ce que** le calcul d'erreur (21) s'effectue pendant que le moteur (1) fonctionne, après la détermination de l'angle (ϕₙₑᵤ) de rotation du moteur nouvellement estimé.

5. Procédé selon l'une des revendications 1 à 3 qui précèdent, **caractérisé en ce que** le calcul d'erreur (21) s'effectue après un débranchement du moteur (1).

6. Procédé selon l'une des revendications précédentes, **caractérisé en ce qu'**il est utilisé dans un appareil de commande de siège de voiture et/ou dans un appareil de commande de toit ouvrant, de lève-vitre ou d'ajusteur de clapet.

7. Ensemble de détermination d'un angle de rotation estimé (ϕ_{b}) d'un moteur électrique (1) par évaluation du signal (Iₘ) de courant du moteur et/ou du signal (Uₘ) de tension du moteur, dans lequel des paramètres du moteur ne sont disponibles qu'après qu'une certaine durée s'est écoulée depuis le branchement du moteur (1) et un angle provisoire de rotation du moteur est défini pendant cette durée à l'aide de paramètres du moteur estimés à partir de courses antérieures du moteur, **caractérisé par**
une unité (21) de calcul d'erreur qui calcule un angle d'erreur (ϕₑᵣᵣₒᵣ) entre l'angle provisoire (ϕ_{b}) de rotation du moteur défini à l'aide de paramètres du moteur estimés à partir de courses antérieures du moteur et un angle estimé (ϕₙₑᵤ) de rotation du moteur défini après la durée définie à l'aide des paramètres du moteur disponibles à ce moment et l'utilise ensuite pour corriger l'angle provisoire de rotation (ϕ_{b}) du moteur.

8. Ensemble selon la revendication 7, **caractérisé par** un modèle (2) du moteur qui détermine l'angle estimé (ϕ_{b}) de rotation du moteur sur la base du signal (Iₘ) du courant du moteur et/ou du signal (Uₘ) de tension du moteur.

9. Ensemble selon la revendication 8, caractérisé en par un aspirateur (3) dans lequel le modèle (2) du moteur est intégré dans un but d'optimisation.

10. Ensemble selon l'une des revendications 7 à 9 qui précèdent, **caractérisé en ce qu'**il est intégré dans un appareil de commande de siège de voiture et/ou dans un appareil de commande de toit ouvrant, de lève-vitre ou d'ajusteur de clapet.
